# EUROPEAN PATENT APPLICATION

(11) **EP 1 277 809 A1**
(43) Date of publication of application: **22.01.2003**
(21) Application number: 02015310.2
(22) Date of filing: 10.07.2002
(51) Int. Cl.: C09D 7/12, C08K 7/22

(54) **A coating which reproduces the aesthetic effect of a fine weave fabric**

(30) Priority: 16.07.2001 IT TO20010697
(71) Applicant: Ver-Plast S.r.l., 10015 Ivrea (Torino) (IT)
(72) Inventor: Arri, Adolfo, 10134 Torino (IT)
(74) Representative: Gerbino, Angelo

(57) **Abstract**

The coating comprises: a resin having -OH groups, a cross linking agent of the aliphatic polyisocyanate type, and a filler formed by polymeric fibres having a yarn count lying between 0.9 and 5 dtex and a length lying between 0.2 and 1 mm and particles having a diameter lying between 20 and 120 µm. Preferably the fibres are of a material chosen from the group consisting of polyamides, rayon, polypropylene and their mixtures.

## Description

The present invention relates to a coating in particular for structural and internal parts of motor vehicles, furnishing elements, furniture objects and the like.

It is known to provide claddings having an aesthetic effect similar to that of a fabric by first covering the substrate to be covered with an adhesive and then causing synthetic fibres to adhere to it by electrostatic effect.

The procedure for production of such cladding is therefore complex and expensive as it involves two separate stages. Moreover, the adhesion of the fibres to the substrate is not stable over time so that these latter are released into the surrounding environment with dangerous effects.

The object of the present invention is that of providing a cladding free from the disadvantages of the prior art described above.

This object is achieved by a coating comprising:
- a resin having -OH groups,
- a cross linking agent of the aliphatic polyisocyanate type and
- a filler formed by polymeric fibres of yarn count lying between 0.9 and 5 dtex and length lying between 0.2 and 1 mm and particles having a diameter lying between 20 and 120 µm.

The coating according to the invention can be applied to the substrate to be clad with a single operation, typically by means of spraying with a pressurised tank, and makes it possible to obtain an homogeneous cladding which, thanks to the presence of the fillers embedded in the polymeric matrix, confers the aesthetic effect of a fine weave fabric and does not tend, even over a long time, to release its constituents into the external environment.

The coating of the invention can therefore be applied in place of textile claddings and conventional flock effect coatings, in particular on fixed or movable motor vehicle components such as internal door panels, handles, hatches, shelves, head linings, columns, drawers, etc.

The coating of the invention is applicable substantially to any substrate, for example of plastics, metal or wood, preferably with a thickness lying between 40 and 60 µm, and moreover has thermal insulation, sound insulating and anti-slip properties. This makes it particularly suitable for example for cladding parts of the passenger compartment of a motor vehicle such as the glove compartments and drawer spaces, so as to attenuate the noise generated by contact with metal objects introduced into their interior.

The fibres of the filler can be natural, artificial or synthetic. Advantageously, they are of a material chosen from the group consisting of polyamides - for example 6 or 6,6-rayon, polypropylene and their mixtures, and have a yarn count lying between 1.9 and 3.3 dtex and a length lying between 0.3 and 0.5 mm.

Advantageously, the particles of the filler have a diameter lying between 40 and 90 µm, are hollow and have a substantially spheroidal form and are made of polyurethane.

The filler generally can constitute from 10% to 40% by weight of the coating and preferably from 10-20%. Advantageously the ratio by weight between the fibres and the particles of the filler lies between 4:1 and 1:1 and is preferably 3:1.

The resin can for example be chosen from the group consisting of hydroxylated resins such as alkyds, acrylic polyols, polyesters and their mixtures.

The cross linking agent is an aliphatic polyisocyanate, which can equally well be cyclic or open chain, and may possibly be of blocked type.

The formulation of the coating of the invention can moreover include conventional solvents such as, for example, esters, ketones, aromatic hydrocarbons, water and higher alcohols, as well as any type of additive usually utilised in the field of coatings, as long as they are compatible with the main ingredients mentioned above.

The following examples of formulations, provided by way of non-limitative example, further illustrate the coating of the present invention. The percentages referred to are intended as percentages by weight.

### EXAMPLE 1

- Hydroxylated polyester
   (Desmophen 670 from Bayer) 46%
- Textile fibre
   (PA 6,6 from Novafloor; 3.3 dtex, 0.8 mm) 10%
- Polyurethane filler
   (Dualite from Lehmann & Voss) 6%
- Aliphatic polyisocyanate
   (Basonate HS 190 from BASF) 12%
- Ester
   (Butyl Acetate) 26%

### EXAMPLE 2

- Polyester acetate
   (Italkyd M353 from Multiresin) 38%
- Textile fibres
   (Rayon; 3.3 dtex, 0.3 mm) 13%
- Polyurethane filler
   (Dualite from Lehmann & Voss) 5%
- Aliphatic polyisocyanate
   (Desmodur N75 from Bayer) 10%
- Ester
   (Ethyl acetate) 34%

Naturally, the principle of the invention remaining the same, the details of construction and the embodiments can be widely varied with respect to what has been described purely by way of example, without by this departing from its ambit.

## Claims

1. A coating comprising:
- a resin having - OH groups,
- a cross linking agent of the aliphatic polyisocyanate type, and
- a filler formed by polymeric fibres having a yarn count lying between 0.9 and 5 dtex and length lying between 0.2 and 1 mm and particles having a diameter lying between 20 and 120 µm.

2. A coating according to Claim 1, in which the said fibres are of a material chosen from the group consisting of polyamides, rayon, polypropylene and their mixtures.

3. A coating according to any preceding claim, in which the said particles are hollow and have a substantially spherical form.

4. A coating according to any preceding claim, in which the said particles are of polyurethane.

5. A coating according to any preceding claim, in which the said synthetic resin is chosen from the group consisting of hydroxylated resins such as alkyds, acrylic polyols, polyesters and their mixtures.

6. A coating according to any preceding claim, in which the said filler constitutes from 10% to 40% by weight of the coating and preferably from 10% to 20%.

7. A coating according to any preceding claim, in which the said polymeric fibres have a yarn count lying between 1.9 and 3.3 dtex and a length lying between 0.3 and 0.5 mm.

8. A coating according to any preceding claim, in which the said particles have a diameter lying between 40 and 90 µm.

9. A coating according to any preceding claim, in which the ratio by weight between the said fibres and the said particles lies between 4:1 and 1:1 and is preferably 3:1.
